Europäisches Patentamt

**European Patent Office**

**Office européen des brevets**

(19)

(11) Publication number: **0 188 815**
**A1**

(12) # EUROPEAN PATENT APPLICATION

(21) Application number: **85116602.5**

(22) Date of filing: **27.12.85**

(51) Int. Cl.⁴: **A 01 N 47/30**
**// (A01N47/30, 43:50, 43:50)**

(30) Priority: **14.01.85 US 691236**

(43) Date of publication of application: **30.07.86**
**Bulletin 86/31**

(84) Designated Contracting States: **AT BE CH DE FR GB IT LI LU NL SE**

(71) Applicant: **AMERICAN CYANAMID COMPANY,**
**1937 West Main Street P.O. Box 60, Stamford**
**Connecticut 06904 (US)**

(72) Inventor: **Kirkland, Kenneth, 9 Elm Drive, East Windsor**
**New Jersey 08520 (US)**
Inventor: **Shafer, Neal, 1335 Moon Drive, Yardley**
**Pennsylvania 19067 (US)**

(74) Representative: **Wächtershäuser, Günter, Dr., Tal 29,**
**D-8000 München 2 (DE)**

(54) **Herbicidal combinations.**

(57) The invention is herbicidal compositions of methyl, 6-(4-isopropyl-4-methyl-5-oxo-2-imidazolin-2-yl)-m-toluate, and methyl 2-(4-isopropyl-4-methyl-5-oxo-2-imidazolin-2-yl)-p-toluate with N'-(3-chloro-4-methylphenyl)-N,N-dimethylurea or N'-(3-chloro-4-methoxyphenyl)-N,N-dimethylurea.

29,956           - 1 -

# HERBICIDAL COMBINATIONS
## BACKGROUND OF THE INVENTION

Annual grasses and broad-leaved weeds which infest cereal crops represent a major problem in grain production throughout the world. Urea herbicides such as N-(3-chloro-4-methylphenyl)-N,N-dimethylurea (chlortoluron), N,N-dimethyl-N'-[4-(1-methylethyl)phenyl]urea (isoproturon), and N'-(3-chloro-4-methoxyphenyl) N,N-dimethylurea (metoxuron) are currently used in various parts of the world for controlling certain broad-leaved weeds and annual grasses in small grains, but do not always provide complete control of all undesirable plant species. N'-(3-chloro-4-methoxyphenyl)-N,N-dimethylurea, metoxuron is a selective herbicide for use in cereals and carrots, particularly against blackgrass, silky bent grass, wild oats, ryegrass, canary grass, and most annual broad-leaved weeds. It is applied to winter and some spring wheats, winter barley and winter rye at early post-emergence at 2.4-3.2 kg a.i./ha or at late post-emergence at 3.2-4.0 kg/ha. Most winter wheats, winter barley and winter rye, and some spring wheat varieties show a high tolerance but some damage has occurred on a few varieties. A mixture of methyl 6-(4-isopropyl-4-methyl-5-oxo-2-imidazolin-2-yl)-m-toluate, and 2-(4-isopropyl-4-methyl-5-oxo-2-imidazolin-2-yl)-p-toluate is a new selective post-emergence herbicide for cereals which provides excellent control of grasses, such as wild oats (Avena spp,), blackgrass (Alopecurus myosuroides), and wind grass or silky bentgrass (Apera spica-venti). It has controlled broadleaved weeds, including wild mustard (Brassica kaber or Sinapis arvensis), black bindweed or wild buckwheat (Polygonum convolvulus), field pennycress (Thlaspi arvense), and wild radish (Raphanus raphanistrum). It also has effectively supressed cleavers edstraw (Galium spp.), pigweed (Amaranthus spp.), kochia (Kochia spp.), Tartary buckwheat (Fagopyrum tataricum), and Russian thistle (Salsola kali). This mixture of imidazolinyl compounds has exhibited tolerance of most varieties of winter and spring wheat and barley. This mixture of compounds, its preparation, and use is disclosed in United States Patent 4,188,487 and United States Patent 4,297,128.

Cereal crops are most sensitive to competition from weeds in their early stages of growth. The onset of competition is likely to be earliest where large numbers of weeds emerge with the cereal crop. In autumn-sown cereals, the grass weeds can be very competitive in the early stages, particularly in crops established by reduced cultivations. The grain from a crop infested with weeds costs more to harvest, clean and dry than grain from a clean crop. Weedy crops take longer to dry which delays and hampers harvesting. The cost of harvesting increases with the total volume of material processed by the combine in relation to the grain recovered. Weeds may increase this volume as well as reducing the quantity of grain by competition. In contrast to the broad-leaved weeds, annual grass weeds, particularly in minimum cultivation systems, are fiercely competitive and high levels of control are necessary to reduce the seed burden in the soil. Additionally, the presence of weed seeds in any cereal grain is objectionable.

Grass weeds, particularly Lolium multiflorum (Italian rye-grass) and Alopecurus myosuroides (Blackgrass) have been found to be the source of ergots (the fruiting bodies of the fungus Claviceps purpurea) which may occur in cereal samples in sufficient quantity to make them unusable until cleaned. Grain which is otherwise suitable for milling may suffer the loss of a quality premium or be refused if it contains more than three per cent of total impurities including weed seeds.

## SUMMARY OF THE INVENTION

The present invention is herbicidal compositions of 6-(4-isopropyl-4-methyl-5-oxo-2-imidazolin-2-yl)-m-toluate, and methyl 2-(4-isopropyl-4-methyl-5-oxo-2-imidazolin-2-yl)-p-toluate and N'-(3-chloro-4-methoxyphenyl)-N,N-dimethylurea which synergistically control rye grass (Lolium), and also provide effective control of a broad spectrum of both broadleaf and grass weeds.

The invention also relates to compositions which provide a selective method for the control of rye-grass (Lolium) and undesirable broadleaf and grass plants in cereal crops by application of aqueous compositions comprising a herbicidally effective amount of mixture of 6-(4-isopropyl-4-methyl-5-oxo-2-imidazolin-2-yl)-m-toluate, and methyl 2-(4-isopropyl-4-methyl-5-oxo-2-imidazolin-2-yl)-p-toluate with N'-(3-chloro-4-methylphenyl)-N,N-dimethylurea, or N,N-dimethyl-N'-[4-(1-methylethyl)phenyl]urea, or N'-(3-chloro-4-methoxyphenyl)N,N-dimethylurea to the foliage of said undesirable plant species.

It has been found that herbicidal combinations of a mixture of 6-(4-isopropyl-4-methyl-5-oxo-2-imidazolin-2-yl)-m-toluate, and methyl 2-(4-isopropyl-4-methyl-5-oxo-2-imidazolin-2-yl)-p-toluate with the urea herbicides N'-(3-chloro-4-methylphenyl)-N,N-dimethylurea (chlortoluron), N,N-dimethyl-N'-[4-(1-methylethyl)phenyl]-urea (isoproturon), and N'-(3-chloro-4-methoxyphenyl)N,N-dimethylurea (metoxuron) are exceedingly effective for the selective control of both broad-leaved and annual grasses in cereal crops. Additionally, combinations of a mixture of 6-(4-isopropyl-4-methyl-5-oxo-2-imidazolin-

- 4 -

2-yl)-m-toluate, and methyl 2-(4-isopropyl-4-methyl-5-oxo-2-imidazolin-2-yl)p-toluate with N'-(3-chloro-4-methoxyphenyl)-N,N-dimethylurea (metoxuron) synergistically controls rye grass (Lolium), while providing effective control of a broad spectrum of weeds in cereal crops when applied as a post-emergence treatment.

In accordance with this invention, the synergistic herbicidal combination comprising methyl, 6-(4-isopropyl-4-methyl-5-oxo-2-imidazolin-2-yl)-m-toluate, and methyl, 2-(4-isopropyl-4-methyl-5-oxo-2-imidazolin-2-yl)-p-toluate and N'-(3-chloro-4-methoxyphenyl)-N,N-dimethylurea is generally dispersed in water and applied as an aqueous spray to the foliage of undesirable plants.

Where desired, a surfactant, spreader, sticker, or the like, can also be added to the solution, and addition of about 0.10% to 0.6% a.i. w/v of a surfactant, such as linear alkyl polyoxyethylene ethers, polyoxyethylene alkyl and dialkyl phenols and the like to the mixture are generally preferred. The imidazolinone compounds and the N'-(3-chloro-4-methoxyphenyl)-N,N-dimethylurea may also be individually prepared as wettable powder formulations, emulsifiable concentrates, water miscible concentrates, or the like and mixed in the spray tank in the field. Any of the commercially available urea formulations may, of course, be used. Typical urea formulations which can be used are as follows:

For effective control of undesirable plants, the synergistic herbicidal combination is normally applied in sufficient amount to provide from about 0.20 kg/ha to 1.1 kg/ha and preferably 0.20 kg to 0.60 kg/ha of a mixture of the imidazolinone compounds, and from about 1.5 to 4.0 kg/ha, and preferably 2.0 to 4.0 kg/ha, of the N'-(3-chloro-4-methoxyphenyl)-N,N-dimethylurea.

The invention is further demonstrated by the

- 5 -

examples below, which are presented as illustrative and are not to be considered as limitative.

<u>EXAMPLE 1-3</u>

Post-emergence applications of methyl 6-(4-isopropyl-4-methyl-5-oxo-2-imidazolin-2-yl)-<u>m</u>-toluate and methyl 2-(4-isopropyl-4-methyl-5-oxo-2-imidazolin-2-yl)-<u>p</u>-toluate, and N'-(3-chloro-4-methoxyphenyl-N,N-dimethylurea alone and in combinations with several urea herbicides at the rates illustrated in Table I below are applied to fields sown with wheat, when the weeds have attained the Z 12-14 stage. Sixteen days after treatment the plots are evaluated for per cent control of rye-grass in direct comparison to an untreated test plot.

The results of these experiments which are summarized in Table II and illustrated graphically in Illustration I below demonstrate the synergistic control of ryegrass (<u>Lolium</u>) utilizing combinations of methyl 6-(4-isopropyl-4-methyl-5-oxo-2-imidazolin-2-yl)-<u>m</u>-toluate and methyl 2-(4-isopropyl-4-methyl-5-oxo-2-imidazolin-2-yl)-<u>p</u>-toluate and N'-(3-chloro-4-methoxyphenyl)-N,N-dimethylurea.

## TABLE I

Herbicidal composition applied

| | Treatments | Rate kg a.i./ha |
|---|---|---|
| 1. | A/surfactant | 0.4/0.4 |
| 2. | Untreated | - |
| 3. | B | 4.0 |
| 4. | B | 2.0 |
| 5. | A/surfactant + B | 0.4/0.4 + 4.0 |
| 6. | A/Surfactant + B | 0.2/0.2 + 2.0 |
| 7. | C | 1.98 |
| 8. | C | 0.99 |
| 9. | A/surfactant + C | 0.4/0.4 + 1.98 |
| 10. | A/surfactant + C | 0.2/0.2 + 0.99 |
| 11. | A/surfactant + D | 0.4/0.4 + 1.35 |

A = Methyl 6-(4-isopropyl-4-methyl-5-oxo-2-imidazo-lin-2-yl)-m-toluate and methyl 2-(4-isopropyl-4-methyl-5-oxo-2-imidazolin-2-yl)-p-toluate

B = N'-(3-chloro-4-methoxyphenyl)-N,N-dimethylurea

C = N,N-dimethyl-N'-[4-(1-methylethyl)phenyl]urea

D = N'-(3-chloro-4-methylphenyl)-N,N-dimethylurea

Surfactant - non-ionic, polyoxyethylene nonylphenol

TABLE II
Control of ryegrass (Lolium) utilizing herbicidal combinations

| Treatments | Rate kg a.i./ha | Trial 1 (4 replicates) % control | Trial 2 (4 replicates) % control | Trial 3 (4 replicates) % control | Average % control |
|---|---|---|---|---|---|
| 1 | 0.4/0.4 | 0.0 | 0.0 | 0.0 | 0.0 |
| 2 | Untreated control | 0.0 | 0.0 | 0.0 | 0.0 |
| 3 | 4.0 | 99.7 | 99.7 | 99.5 | 99.7 |
| 4 | 2.0 | 55.9 | 87.7 | 82.7 | 75.5 |
| 5 | 0.4/0.4 + 4.0 | 99.7 | 99.8 | 98.5 | 99.4 |
| 6 | 0.2/0.2 + 2.0 | 97.1 | 97.4 | 95.9 | 96.8 |
| 7 | 1.98 | 97.3 | 98.1 | 98.9 | 98.7 |
| 8 | 0.98 | 76.4 | 99.0 | 89.7 | 88.4 |
| 9 | 0.4/0.4 + 4.0 | 96.3 | 99.1 | 99.6 | 98.3 |
| 10 | 0.2/0.2 + 4.0 | 85.4 | 98.8 | 75.4 | 86.5 |
| 11 | 0.4/0.4 + 1.35 | 97.0 | 98.4 | 90.5 | 95.3 |

## ILLUSTRATION I
### Average % control trials 1, 2, 3 (combinations of A + B)

Graph showing average % control for treatments 1 through 6:
- Treatment 1: 0.0
- Treatment 2: 0.0
- Treatment 3: 99.66
- Treatment 4: 75.47
- Treatment 5: 99.36
- Treatment 6: 96.77

X-axis: Treatment (1–6)
Y-axis: 10–100

- 8 -

WHAT IS CLAIMED IS:

1.  A herbicidal composition comprising, a mixture of 6-(4-isopropyl-4-methyl-5-oxo-2-imidazolin-2-yl)-m-toluate, and methyl 2-(4-isopropyl-4-methyl-5-oxo-2-imidazolin-2- yl)-p-toluate with N'-(3-chloro-4-methylphenyl)-N,N-dimethylurea, or N,N-dimethyl-N'-[4-(1-methylethyl)phenyl]urea or N'-(3-chloro-4-methoxyphenyl)N,N-dimethylurea.

2.  A herbicidal composition according to Claim 1 comprising a herbicidally effective amount of

    (a) a mixture of methyl 6-(4-isopropyl-4-methyl-5-oxo-2-imidazolin-2-yl)-m-toluate and methyl 2-(4-(isopropyl-4-methyl-5-oxo-2-imidazolin-2-yl)-p- toluate; and

    (b) N'-(3-chloro-4-methoxyphenyl)-N,N-dimethylurea.

3.  A herbicidal composition according to Claim 2, wherein the composition is sufficient to provide from about 0.20 to 1.10 kilograms per hectare of the mixture of imidazolinyl toluates and from 2.0 to 4.0 kilograms per hectare of N'-(3-chloro-4-methoxyphenyl)-N,N-dimethylurea.

4.  A herbicidal composition according to Claim 3, wherein the composition is sufficient to provide from about 0.20 to 0.40 kilograms per hectare of the mixture of imidazolinyl toluates and 2.0 kilograms per hectare of N'-(3-chloro-4-methoxyphenyl)-N,N-dimethylurea.

5.  A method for the selective post-emergence control of undesirable grasses and broadleaf weeds in the presence of an agronomically important crop comprising, applying to the foliage of the undesirable plant species an aqueous composition comprising a herbicidally effective amount of a mixture of 6-(4-isopropyl-4-methyl-5-oxo-2-imidazolin-2-yl)-m-toluate,
and methyl 2-(4-isopropyl-4-methyl-5-oxo-2-imidazolin-2-
yl)-p-toluate with N'-(3-chloro-4-methylphenyl)-N,N-
dimethylurea, or N,N-dimethyl-N'-[4-(1-methylethyl)-
phenyl]urea or N'-(3-chloro-4-methoxyphenyl)N,N-di-
methylurea.

6.  A method according to Claim 5 for the
selective post-emergence control of blackgrass, ryegrass,
silky bentgrass, wild oats and undesirable broadleaf
weeds in the presence of an agronomically important
crop comprising, applying to the foliage of the undesirable plant species an aqueous composition comprising a herbicidally effective amount of a mixture
of 6-(4-isopropyl-4-methyl-5-oxo-2-imidazolin-2-yl)-m-
toluate, and methyl 2-(4-isopropyl-4-methyl-5-oxo-2-
imidazolin-2-yl)-p-toluate with N'-(3-chloro-4-methylphenyl)-N,N-dimethylurea, or N,N-dimethyl-N'-[4-(1-
methylethyl)phenyl]urea or N'-(3-chloro-4-methoxyphenyl)N,N-dimethylurea.

7.  A method for the control of ryegrass,
wild oats and undesirable broadleaf weeds according
to Claim 5 comprising, applying to the foliage of the
undesirable plant species an aqueous composition of a
herbicidally effective amount of a synergistic combination
comprising

(a) a mixture of methyl 6-(4-isopropyl-4-methyl-
5-oxo-2-imidazolin-2-yl)-m-toluate and methyl 2-(4-isopropyl-4-methyl-5-oxo-2-imidazolin-2-yl)-p- toluate;
and

(b) N'-(3-chloro-4-methoxyphenyl)-N,N-dimethyl-
urea; and

(c) a non-ionic surfactant.

8.  A method according to Claim 7, wherein
the composition is sufficient to provide from about
0.20 to 1.10 kilograms per hectare of the mixture of the imidazolinyl toluates, and from 2.0 to 4.0 kilograms per hectare of N'-(3-chloro-4-methoxyphenyl)-N,N-dimethylurea, and from 0.20 to 0.40 kilograms per hectare of the surfactant.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-4 297 128  (M. LOS) <br> * Claims 1-6,10,25 * <br> --- | 1-8 | A 01 N  47/30 // <br> (A 01 N  47/30 <br> A 01 N  43:50 <br> A 01 N  43:50 ) |
| A | US-A-4 488 896  (G. LAMB et al.) <br> * Column 1, line 37 - column 2, line 46; claims * <br> --- | 1-8 | |
| A | GB-A-2 068 233  (MAY & BAKER LTD.) <br> * Page 1, lines 21-58; experiment 2; examples 1,3-5,8; claims 1-12,17-22,26-30 * <br> ----- | 1-8 | |
| | | | **TECHNICAL FIELDS SEARCHED (Int. Cl.4)** <br><br> A 01 N |

The present search report has been drawn up for all claims

| Place of search | Date of completion of the search | Examiner |
|---|---|---|
| THE HAGUE | 25-04-1986 | FLETCHER A.S. |